# EUROPÄISCHE PATENTSCHRIFT

(11) **EP 0 856 791 B1**
(45) Veröffentlichungstag und Bekanntmachung des Hinweises auf die Patenterteilung: **21.06.2000**
(21) Anmeldenummer: 97101357.8
(22) Anmeldetag: 29.01.1997
(51) Int. Cl.: G06F 11/00, G05B 19/048

(54) **System mit Störungsbewältigung sowie Verfahren zur Störungsbewältigung**
System with and method for fault recovery
Système et méthode de recouvrement après défaillance

(43) Veröffentlichungstag der Anmeldung: 05.08.1998
(73) Patentinhaber: Verein Deutscher Werkzeugmaschinenfabriken e.V. (VDW), 60325 Frankfurt am Main (DE)
(72) Erfinder: Sabbah, Alexander, 80634 München (DE); Köhne, Thilo, 81737 München (DE); Koch, Michael, Dr., 80807 München (DE)
(74) Vertreter: Schwabe, Hans-Georg, Dipl.-Ing.

(56) Entgegenhaltungen:
- EP-A- 0 424 031
- DE-A- 4 336 863
- US-A- 5 316 347

## Beschreibung

Die Erfindung betrifft ein System gemäß dem Oberbegriff des Patentanspruchs 1 sowie ein Verfahren gemäß dem Oberbegriff des Patentanspruchs 23.

Im Stand der Technik sind diverse Systeme bzw. Verfahren gemäß dem Oberbegriff des Patentanspruchs 1 bzw. Patentanspruchs 23 bekannt. Bei entsprechenden Systemen handelt es sich beispielsweise um computergesteuerte Werkzeugmaschinen, die programmgesteuert Fertigungsabläufe vornehmen, beispielsweise um Halbzeuge zu veredeln bzw. Werkstücke fertigzustellen. Um Werkstücke hochgenau und mit verringertem Aufwand produzieren zu können, werden hierzu die computergesteuerten Werkzeugmaschinen eingesetzt, wobei Befehlsabläufe in Form von Programmen für einen beliebig oft wiederholbaren Fertigungsablauf sorgen.

Leider ist es hierbei nicht selten, daß Störungen auftreten. So ist es beispielsweise möglich, daß ein von einem Greifer einer Werkzeugmaschine zu greifendes Werkstück nicht korrekt auf einer Zwischenablage angeordnet ist und der Greifer das Werkstück aufgrund dieser Fehlplazierung nicht zu greifen vermag. Oder der Greifer vermag zwar das Werkstück zu greifen, jedoch wird es, da es nicht festgehalten werden kann, fallengelassen, oder es treten andere Störungen auf.

Nun ist es möglich, auf verschiedene Störungen mittels einer entsprechenden Programmierung zu reagieren. Dabei werden üblicherweise innerhalb eines Steuerprogramms Zustandsabfragen vorgesehen, die zu einem bestimmten Ergebnis führen müssen. Wenn das Resultat einer Abfrage nicht zu dem bestimmten Ergebnis führt, ist dies ein Indiz für das Auftreten einer Störung. Sollte eine Störung erfaßt worden sein, so werden über Alternativen, die im Programm eingebaut sind, verschiedene Befehlsabläufe zur Fehlerbewältigung abgewickelt bzw. angesteuert.

Insbesondere bei komplexeren Werkzeugmaschinen oder ganzen Fertigungsstraßen, aber auch bei prinzipiell sehr einfachen Prozessen, führt eine solche Verfahrensweise jedoch dazu, daß das Steuerprogramm, das als Normal-Befehlsablauf angesehen werden kann, immer komplizierter wird, so daß bereits die Handhabung von Störungen in selbst einfacheren Systemen, insbesondere Werkzeugmaschinen, höchst unübersichtlich wird. Dies trifft erst recht für kompliziertere Werkzeugmaschinen und ganze Fertigungsstraßen zu. Dies führt zu unzuverlässigen Steuerungsprogrammen, die vielen Fehlersituationen nicht gerecht werden können. Trotzdem sind derlei Programme mit einem hohen Aufwand verbunden.

Dementsprechend kann es natürlich auch in anderen computergesteuerten Vorrichtungen zu Störungen kommen, etwa in Bankautomaten, wenn Störungssituationen auftreten, die weniger häufig sind und zu deren Behebung im Programm folglich keine Alternativen und Programmabläufe vorgesehen sind. Entsprechendes gilt auch für diverse andere computergesteuerte Abläufe, unabhängig davon, ob diese Abläufe in einem Fertigungsprozeß oder dergleichen verwendbar sind. Wesentlich ist dabei lediglich, daß Störungen auftreten können, für die aufgrunddessen, daß ein entsprechendes Programm zu komplex würde, keine zur Störungsbewältigung brauchbaren Alternativen bzw. Alternativabläufe vorgesehen sind.

Die DE 43 36 863 A1 offenbart ein Verfahren zur Steuerung von Koordinatenmeßgeräten, wobei beim Auftreten einer Störung eines Meßablaufs eine Fehlermeldung ausgegeben wird und eine Steuerungssoftware ein Fehlerbehandlungsmodul aufruft, welches den automatischen Meßablauf unterbricht und in geänderter Form weiterführt.

Die EP 0 424 031 A2 beschreibt ein Verfahren zum dynamischen Steuern der Arbeitsweise eines Programms, wobei bei Auftreten eines Fehlers eine spezielle Routine den Ablauf des Programms unterbricht und eine bestimmte Anzahl an ausgeführten Programmschritten rückwärts durchläuft.

Aus der US 5,361,347 A sind Komponenten eines Systems bekannt, die für die Berücksichtigung in Fehlerbehandlungsroutinen als Netz modelliert sind.

Es ist die Aufgabe der vorliegenden Erfindung, ein System bzw. ein Verfahren vorzuschlagen, das wenigstens bei der teilweisen Ausräumung der obigen Probleme des Standes der Technik behilflich sein kann. Insbesondere sollen ein System bzw. ein Verfahren vorgeschlagen werden, die Störungen in vereinfachter Weise bewältigen helfen können.

Die obigen Aufgaben werden durch ein System mit den im Patentanspruch 1 aufgeführten Merkmalen gelöst.

Ferner werden die oben formulierten Aufgaben durch ein Verfahren mit den im Patentanspruch 23 aufgeführten Schritten gelöst.

Vorteilhafte System- bzw. Verfahrensvarianten werden durch die in den Unteransprüchen definierten Merkmale bzw. Schritte festgelegt.

Die gemäß der vorliegenden Erfindung zu erzielenden Vorteile beruhen in erster Linie darauf, daß ein System mit wenigstens einem Steuerabschnitt zur Abarbeitung mindestens eines Normal-Befehlsablaufs, mit einem Eingabeabschnitt, über den Befehle und/oder Daten eingebbar sind, mit einem Ausgabeabschnitt zur Ausgabe von Befehlen und/oder Daten dadurch zur Bewältigung einer Störungssituation ausgebildet ist, daß ein Fehler-Steuerabschnitt zur Abarbeitung eines Fehler-Befehlsablaufes vorgesehen ist, der aufgerufen wird, wenn bei der Abarbeitung des Normal-Befehlsablaufes durch das Auftreten einer Störung der Fehler-Befehlsablauf aufgerufen wird. Dabei arbeitet der Fehler-Befehlsablauf im wesentlichen von dem Normal-Befehlsablauf losgelöst, um den Normal-Befehlsablauf wieder einsetzbar zu machen.

Das auch hier einsetzbare Verfahren gemäß der Erfindung zur Bewältigung einer Störung läuft dabei so ab, das während ein Normal-Befehlsablauf durchgeführt wird und dabei eine Diskrepanz zwischen einem Soll-Zustand und einem Ist-Zustand auftritt, der Fehler-Befehlsablauf aufgerufen wird, da die Diskrepanz zwischen einem Soll-Zustand und einem Ist-Zustand eine Störung bedeutet. Der Normal-Befehlsablauf und/oder Aktoren und/oder Sensoren übergeben dem Fehler-Befehlsablauf, der prinzipiell ein Programm darstellen kann, Daten, aufgrund derer der Fehler-Befehlsablauf die vorgekommene Störung analysieren kann.

Dem Fehler-Befehlsablauf sind dabei Informationen zugänglich, die bestimmten Störungsmustern zugeordnet sind, so daß der Fehler-Befehlsablauf aufgrund des zu der Störung gehörigen Datensatzes eine Strategie zur Bewältigung des Fehlers ausarbeiten und auswählen kann.

Mittels der beispielsweise in einem Speichermedium enthaltenen Informationen, die für den Fehler-Befehlsablauf zugreifbar sind, kann der Fehler-Befehlsablauf einen Bereich in dem Normal-Befehlsablauf anvisieren und den Normal-Befehlsablauf an dieser Stelle wieder aktivieren, während er zuvor deaktiviert bzw. in einem inaktiven Zustand war, so daß die Störung durch Fortsetzen des Normal-Befehlsablaufs an einer bestimmten Stelle wenigstens teilweise ausgeräumt werden kann.

Dabei ist es vorteilhaft, wenn passend zu dem angesteuerten Bereich in dem Normal-Befehlsablauf die Aktoren in einen definierten Zustand versetzt werden, der zu dem Parameter- bzw. Datensatz des angesteuerten Bereichs in dem Normal-Befehlsablauf paßt.

Damit kann eine Störungssituation dadurch bewältigt werden, daß die Aktoren eines Systems. beispielsweise einer Werkzeugmaschine, in einen bestimmten Zustand versetzt werden, der zu dem angesteuerten Bereich in dem Normal-Befehlsablauf paßt, so daß der Normal-Befehlsablauf fortgesetzt werden kann, wobei die reale Welt und/oder Normal-Befehlsablauf aneinander angepaßt worden sind.

Gemäß der Erfindung ist das System auch dazu in der Lage, Aktoren von Komponenten des Systems Daten bzw. Befehle zu übermitteln, und zwar von sämtlichen der verschiedenen Befehlsabläufe aus, um auf die reale Welt einwirken zu können. Zudem sollte es auch möglich sein, von sämtlichen der genannten Befehlsabläufe bzw. Programme aus Informationen bzw. Daten von den Aktoren abzufragen. die den verschiedenen Befehlsabläufen, d.h. dem Normal-Befehlsablauf, dem Fehler-Befehlsablauf sowie dem Ersatz-Normal-Befehlsablauf, Informationen über den tatsächlichen aktuellen Zustand des jeweiligen Aktors zur Verfügung stellen. Auf diese Weise läßt sich die Datenverwaltung innerhalb des gesamten erfindungsgemäßen Systems vereinfachen und die Transparenz des Systems kann gesteigert werden, da gemäß der Erfindung ein prinzipiell sehr komplexes Programm, das intellektuell nahezu undurchdringlich werden kann. in verschiedene Programme bzw. Befehlsabläufe aufgeteilt werden kann, mittels derer selbst extrem komplizierte Systeme gemäß der Erfindung, beispielsweise ganze Fertigungsstrallen, auch im Falle von selbst seltenen Störungen im Betrieb gehalten werden können, selbst wenn ein alternativ ansteuerbarer Befehlsablauf innerhalb eines Fehler-Befehlsahlaufs dazu führen sollte, daß eine Bedienungsperson herbeigerufen wird. Dies kann sogar so weit gehen, daß der Fehler-Befehlsablauf beispielsweise nachts, wenn kein Bedienungspersonal in einer ansonsten automatisch arbeitenden Fabrikationsanlage zugegen ist. Bedienungspersonal per Telefon oder Funk anruft, um das Bedienungspersonal zur Bewältigung der Störung herbeizurufen,

Dabei ist es besonders zu bevorzugen, wenn einem jeden Aktor bzw. einer jeden Komponente, die wenigstens einen Aktor umfaßt, ein Modellierungsnetz zugeordnet werden kann, das Informationen/Daten über den tatsächlichen Zustand der Komponente bzw. des Aktors halten kann. Auf ein entsprechendes einem Aktor zugeordnetes Modellierungsnetz kann dann von sämtlichen der verschiedenen Befehlsabläufe aus zugegriffen werden, so daß die Transparenz des Systems wesentlich gesteigert worden ist. Dabei kann das Modellierungsnetz insbesondere als Petrinetz ausgebildet werden, bei dem jeder Zustand eines Aktors bzw, Komponente einer Stelle zugeordnet ist und der zugeordnete Aktor bzw. Komponente seinen bzw. ihren Zustand nicht verändert, wenn das Modellierungsnetz seinen Zustand nicht verändert. Erst wenn das Modellierungsnetz den Befehl erhält, die Komponente (den Aktor) in einen anderen Zustand zu bewegen, kann das Modellierungsnetz in einen anderen Zustand überführt werden, der dann wiederum gehalten wird, bis wieder ein Befehl erteilt wird, wonach der Aktor in einen anderen Zustand überführt werden soll. Das Modellierungsnetz hält dann die Information über diesen neuen Zustand solange wie sich der Aktor in der realen Welt in diesem Zustand befindet. Dabei ist innerhalb des Modellierungsnetzes bzw. Petrinetzes bevorzugt jedem Zustand des Aktors in der realen Welt eine Stelle zugeordnet.

Zwar kann als besonders bevorzugte Datenstruktur insbesondere für den Fehler-Befehlsablauf ein Petrinetz. insbesondere auch ein einseitig offenes Petrinetz. verwendet werden, jedoch gibt es auch diverse andere Modelle, die zur Verwirklichung der Erfindung herangezogen werden könnten. Da diese zum Stand der Technik gehören, brauchen diese hier nicht näher ausgeführt zu werden. Nur beispielhaft sei auf die Reihe "Informatik", herausgegeben von Karl-Heinz Böhling. Ulrich Kulisch, Hermann Maurer, erschienen in B.l.-Wissenschaftsverlag, verwiesen, aus der sich diverse Datenstrukturen ergeben, die auch gemäß der vorliegenden Erfindung zum Einsatz gelangen könnten. Aufgrund der vorliegenden Offenbarung wird der Fachmann in die Lage versetzt, die Erfindung in Verbindung mit den diversen theoretischen Datenstrukturen zu kombinieren, um mittels verschiedener Datenstrukturen ein vergleichbares Ergebnis zu erzielen, wie es im Rahmen der vorliegenden Erfindung zu erzielen ist.

Bei dem besagten Modellierungsnetz bzw. Petrinetz gemäß einer bevorzugten Ausführungsform der Erfindung läßt sich der abgespeicherte Zustand im Netz erst verändern, wenn eine Bedingung zu einem Ereignis paßt und infolge dieser Koinzidenz eine Transition durchführbar wird, wenn der zugeordnete Aktor seinen Zustand ändert. Das heißt also, von der Datenstruktur des Modellierungsnetzes bzw. Petri-Netzes her gesehen, wird in der Abarbeitung der Datenstruktur nicht fortgeschritten, bis ein bestimmtes Ereignis eingetreten ist. Der Zustand der in dem Netz gespeicherten Informationen wird aufrechterhalten, bis das Ereignis eintritt. Dies bedeutet, daß ein Aktor, beispielsweise in der Form eines Greifers, immer exakt zu dem ihm zugeordneten Modellierungsnetz hinsichtlich des abgespeicherten Zustandes paßt. Sollte also beispielsweise ein Greifer seitens eines Normal-Befehlsablaufs oder eines sonstigen Befehlsablaufs den Befehl erhalten, seinen Zustand zu ändern, und aufgrund einer Störung nicht dazu in der Lage sein, diesen Zustand zu ändern, so würde sich aufgrund des fehlenden Ereignisses, daß sich nämlich der Greifer in der realen Welt in einen anderen Zustand begibt, der im Modellierungsnetz abgespeicherte Zustand dahingehend ändern, daß sämtliche Befehlsabläufe bei Auftreten einer Störung den tatsächlichen, gestörten Zustand des Aktors abfragen können und nicht den, den der Aktor haben sollte, wenn das befohlene Ereignis auch tatsächlich eingetreten wäre. Auf diese Weise kann das gesamte System in der realen Welt einen tatsächlichen Zustand herbeiführen, der sich auf einen für das System verfügbaren Normalablauf oder Ersatz-Normalablauf projizieren läßt, um diesen an einer vorgegebenen Stelle fortfahren zu lassen, um eine Störung zu bewältigen. Falls das erfindungsgemäße System nur beschränkt dazu in der Lage sein soll, selbständig Störungen zu bewältigen, kann bei bestimmten Störungen, die nicht von der Datenstruktur her erfaßt worden sind. eine Bedienungsperson herbeigerufen werden, die dann in die Fehleranalyse und die Störungsbewältigung einbezogen werden kann.

Es versteht sich von selbst, daß die obigen Normal-Befehlsabläufe, Fehler-Befehlsabläufe und Ersatz-Normal-Befehlsabläufe entsprechend wie das Modellierungsnetz als Petrinetz. insbesondere als einseitig offenes Petrinetz ausgebildet sein können. Bei den Normal-Befehlsabläufen und den Ersatz-Normal-Befehlsabläufen ist es möglich, prinzipiell geschlossene Petrinetze zu verwenden. während es hei dem Fehler-Befehlsablauf ratsam ist, einseitig offene Petrinetze zu verwenden, da das Beschreiten eines Astes innerhalb eines Petrinetzes zu einer bestimmten Störung gehört, die zu einer bestimmten Therapie zur Störungsbewältigung führen muß. Das heißt, am Ende eines derartigen, aufgrund einer bestimmten Störung angelaufenen und durchlaufenen Astes liegt eine bestimmte Therapierungsstrategie, die zum einen dazu führen kann, daß die reale Welt in Form der Aktoren in einen bestimmten definierten Zustand und die Datenstruktur in einen bestimmten Zustand überführt wird, der zu dem betreffenden definierten Zustand paßt, so daß dort fortgefahren werden kann. beispielsweise einen Fertigungsprozeß abzuarbeiten, ohne daß die aufgetretene Störung das ganze System außer Betrieb zu setzen vermag.

Um eine Bewältigung von Störungen in diversen vorhandenen Normal-Befehlsabläufen abwickeln zu können, kann ein universeller Fehler-Befehlsablauf vorgesehen sein. der verschiedene Einstiegsadressen hat, die von den verschiedenen Normal-Befehlsabläufen aus, in denen Störungen auftreten, aufgerufen werden können. Natürlich kann zur Steigerung der Übersichtlichkeit auch jedem unterschiedlichen Normal-Befehlsablauf ein spezialisiert ausgebildeter Fehler-Befehlsablauf zugeordnet werden, der sich den besonderen Anforderungen eines speziellen Normal-Befehlsablaufs zu widmen vermag.

Wie oben bereits angedeutet, kann der Normal-Befehlsablauf im Falle des Aufrufs des Fehler-Befehlsablaufs einen Datensatz in den Fehler-Befehlsablauf übergeben, der diesem Aufschluß über den gegenwärtigen Zustand des dem Normal-Befehlsablauf zugeordneten Systems gibt. Alternativ kann der aufgerufene Fehler-Befehlsablauf entweder zusätzlich Sensoren und Aktoren ansteuern, um Informationen über den Systemzustand zu erhalten, die losgelöst von etwaigen Fehlern im Normal-Befehlsablauf sind, oder aber der Fehler-Befehlsablauf kann ausschließlich Informationen von Sensoren und Aktoren abrufen, um vollkommen losgelöst von dem Normal-Befehlsablauf eine Fehleranalyse vorzunehmen. Am Ende der Analyse kann dann als Ergebnis ein Datensatz vorliegen, der den Fehler-Befehlsablauf dazu befähigt, den Normal-Befehlsablauf wiedereinsetzbar zu machen, indem in den Normal-Befehlsablauf beispielsweise bis zu einem bestimmten Befehl im Befehlsablauf zurückgegangen wird, um von dort aus neu zu beginnen oder zu einem bestimmten Befehl im Befehlsablauf vorzuspringen, um ab dort mit dem Normal-Befehlsablauf fortzufahren. Insofern der Fehler-Befehlsablauf zu dem Analyseergebnis gelangt, daß der Normal-Befehlsablauf aufgrund der Art der Störung nicht mehr verwendbar ist, kann der Fehler-Befehlsablauf auch einen Ersatz-Normal-Befehlsablauf aufrufen, der dann von der aufgetretenen Störung ausgehend weiter vorgehen kann. Natürlich kann der Fehler-Befehlsablauf auch einen definierten Zustand einstellen, um in Abhängigkeit von dem einstellbaren definierten Zustand einen bestimmten Ersatz-Normal-Befehlsablauf aufzurufen oder an eine bestimmte Stelle im Normal-Befehlsablauf zu übergeben, um ab dort den Normal-Befehlsablauf fortzusetzen. Diese bestimmte Stelle kann, wie bereits angedeutet, in einem Programmteil bzw. Befehlsteil vorhanden sein, der in Richtung der normalen Abarbeitungsreihenfolge der Befehle rückwärtig angeordnet ist, d.h. in dem Normal-Befehlsablauf werden Rückwärtssprünge durchgeführt, oder der in der Abarbeitungsrichtung plaziert ist (Vorwärtssprünge). Dabei kann dieses Wechseln zu einem anderen Befehl in Rückwärtsrichtung oder in Vorwärtsrichtung sowohl sprunghaft als auch Befehl für Befehl insbesondere rückwärts schreitend durchgeführt werden.

Besonders vorteilhaft ist es, den Normal-Befehlsablauf, der zur Zeit abgearbeitet wird, bei Auftreten einer Störung anzuhalten, wenn der Fehler-Befehlsablauf aufgrund des Auftretens der Störung aufgerufen wird. Natürlich ist es auch möglich, den Normal-Befehlsablauf seitens des aufgerufenen Fehler-Befehlsablaufs oder sonstwie durch das auftretende Störungsereignis anzuhalten.

Dabei ist es gegenüber dem Stand der Technik besonders vorteilhaft, daß im Normal-Befehlsablauf, bzw. irgendeinem gegenwärtig abzuarbeitenden Befehlsablauf, ein Zustand während der Abarbeitung der in dem Ablauf enthaltenen Befehle festgehalten und konserviert werden kann. Hier werden in dem Normal-Befehlsablauf keine Alternativen oder verschachtelten Alternativen abgearbeitet, wie es im Stand der Technik üblich ist, sondern anstelle der Störungsbewältigung in einem komplexen Normal-Befehlsablauf wird ein auf die Störungsbewältigung fixierter und spezialisierter Fehler-Befehlsablauf aufgerufen, der aufgrund von Informationen, die in üblichen Datenfeldern gespeichert sein können, jedoch auch aufgrund des Zugriffs auf neuronale Netzwerke in besonders vorteilhafter Weise zugänglich gemacht werden können, eine Fehlerdiagnose vornehmen kann, um dann eine Strategie auszuwählen, durch die die Störung bewältigt werden kann.

Ein erfindungsgemäßes System kann dabei vorteilhafterweise wenigstens einen Sensor aufweisen, um Zustandsparameter über die reale Welt zu erhalten. Als reale Welt bietet sich hierbei insbesondere eine Werkzeugmaschine an, die beispielsweise mit Endschaltern, Näherungssensoren, Endpositionsschaltern, Positionsschaltern, Lichtschranken, induktiven Schaltern, binären Signalgebern und/oder dergleichen versehen ist. Natürlich kommen auch komplexere Überwachungssysteme, wie Video-Überwachungssysteme mit CCD-Kamera oder dergleichen, infrage.

Ferner sollte immer, wie eingangs bereits angedeutet, das erfindungsgemäß ausgebildete System wenigstens einen Aktor umfassen, um auf die reale Welt einzuwirken, um diese zu verändern oder mit einem vorgegebenen Zustand im Normal-Befehlsablauf, im Fehler-Befehlsablauf und/oder im Ersatz-Normal-Befehlsablaub in Einklang zu bringen. Dabei kann ein Aktor beispielsweise ein hydraulisch oder pneumatisch betätigbarer Zylinder, ein Elektroantrieb oder dergleichen mehr sein.

Natürlich kann auch ein Programm vor eine Situation gestellt werden, die es nicht bewältigen kann. Ein entsprechendes Programm kann beispielsweise zur Verarbeitung von Meßwerten, zur Sortierung von Daten oder dergleichen ausgebildet sein. Wenn z.B. ein Programm zum Errechnen der Parameter einer physikalischen Funktion aufgrund von Meßdaten abgearbeitet wird und Daten auftreten, die von dem Programm nicht verarbeitet werden können, kann es geschehen, daß die zentrale Recheneinheit, beispielsweise einer Universität, über Stunden blockiert ist, ohne daß tatsächlich ein Ergebnis erarbeitet werden könnten. Zum Beispiel kann ein Wert eines Datenfeldes nicht in dem erforderlichen Format geschrieben sein bzw. statt eines Kommas kann versehentlich ein Punkt gesetzt worden sein usw. In einem solchen Fall kann das Programm, in dem die Störung aufgetreten ist, ein Fehlerprogramm, d.h. einen Fehler-Befehlsablauf, aufrufen, um eine Störungsanalyse zu betreiben und um die Störung zu beheben, beispielsweise indem ein fälschlicher Punkt in einem Datenwert durch ein Komma ersetzt wird, der entsprechende Datenwert einfach ignoriert wird und das Programm, d.h. der Normal-Befehlsablauf, wieder an einer bestimmten Stelle aufgerufen wird, wo der Normal-Befehlsablauf dann wieder fortgesetzt werden kann, ohne daß die Störung zu einer dauerhaften Fehlfunktion bzw. einem Stillstand führen kann. Informationen zu Fehlern, die an bestimmten Plätzen in dem Programm auftreten können, können beispielsweise in einer Wissensbasis enthalten sein.

Natürlich ist es möglich, auf diverse Störungen auch mittels der üblichen in einem Normal-Befehlsablauf bzw. Programm vorgesehenen Abfragen mit der im Falle eines Fehlers folgenden Ansteuerung einer alternativen Stelle im Programm zu reagieren, wobei dies jedoch, wie bereits angedeutet, dazu führt, daß ein entsprechendes Programm, in dem an den verschiedensten Stellen Fehler auftreten können, unübersichtlich wird, und die Urheber entsprechender Programme aufgrund der zunehmenden Unübersichtlichkeit dazu gezwungen sind, lediglich Störungs-Befehlsabfolgen in ein Programm bzw. einen Normal-Befehlsablauf einzuarbeiten, die sich den am häufigsten auftretenden Fehlern widmen. Dies gilt für wenig komplexe Systeme, jedoch lassen sich komplexere Systeme auf diese Weise kaum ausreichend absichern. So macht es die vorliegende Erfindung möglich, bei auftreten eines bislang nicht bekannten Fehlers den Fehler-Befehlsablauf eines Normalprogrammes um einen weiteren alternativ vorgesehenen Ast zu erweitern, um eine entsprechende Fehleranalyse mit einer weiteren Fehlerdiagnostik und Fehlertherapie zur Bewältigung der Störung dem Fehler-Befehlsablauf hinzuzufügen, ohne durch weitere Verschachtelungen in einem sowieso bereits sehr komplexen Normal-Befehlsablauf unerwartete und unvorhersehbare Situationen hervorzurufen.

Vorteilhafterweise lassen sich die von den Sensoren abfragbaren Informationen über den Zustand der realen Welt von den verschiedenen Befehlsabläufen, d.h. dem Normal-Befehlsablauf, dem Fehler-Befehlsablauf sowie dem Ersatz-Normal-Befehlsablauf, abfragen, um eine weitere Entkoppelung der verschiedenen Befehlsabläufe in dem erfindungsgemäßen System erzielen zu können.

Die Meldungen über diverse Störungen können gemäß der Erfindung in diverser Weise in das System Eingang finden. Die Meldungen können beispielsweise vom Bediener eingegeben werden, der selbständig eine Störung erkannt hat und eine Fehleranalyse wünscht, die nach Möglichkeit zur Bewältigung der Störung führen soll. Hierbei ist es von Vorteil, daß der Bediener nicht hochqualifiziert sein muß, da er dem erfindungsgemäß ausgebildeten System die Störungsbewältigung überlassen kann. Insofern das erfindungsgemäße System nicht vollständig zur selbständigen Störungsbeseitigung in der Lage ist, kann das System dem Bediener Informationen zur Verfügung stellen, die den Bediener in die Lage versetzen, die Störung zu beseitigen.

Die Meldungen können auch von aktiven Sensoren, die Signale abgeben, und von passiven Sensoren stammen, von denen die Systemsteuerung Signale abfragen muß. Ferner kann das System intelligente Komponenten enthalten, die selbständig zu Aktionen in einem gewissen Umfang in der Lage sind, beispielsweise ein einer bestimmten Fertigungsstation zugeordnete Zellenrechner, SPS-Steuerungen und dergleichen mehr. Durch die Verwendung derartiger untergeordneter intelligenter Komponenten kann die Transparenz des Gesamtsystems abermals gesteigert werden. wenn beispielsweise in einer Fertigungsstraße diverse Fertigungsstationen angeordnet sind, die jeweils selbständig betrieben werden können, während lediglich im Falle einer übergreifenden Störung ein Leitrechner hinzugezogen wird, der dann eine Fehleranalyse und Fehlertherapierung für die gesamte Fertigungsstraße vornimmt, und zwar entsprechend den voranstehend und nachfolgend aufgeführten Grundsätzen der vorliegenden Erfindung und deren vorteilhafter Ausführungsformen.

Im einfachsten Fall können auch Meldungen über Störungen durch einfache Zeitüberwachung realisiert werden. Dabei kann beispielsweise einem Transportsystem die Aufgabe übermittelt werden, ein Werkstück von einem Zwischenspeicher zu einer Werkzeugmaschine zu bringen, wobei dem Transportsystem ein bestimmtes Zeitintervall zur Verfügung gestellt wird, um diese Aufgabe zu lösen. Übergibt das Transportsystem das Werkstück der Werkzeugmaschine nicht innerhalb dieser vorgegebenen Zeitdauer, so wird eine Fehlermeldung aufgrund der Zeitüberschreitung abgegeben und das System beginnt mit der Analyse und Therapierung der Störung, wobei der Normal-Befehlsablauf für eine ganze Fertigungsstraße angehalten werden kann, um den dieser Fertigungsstraße zugeordneten Normal-Befehlsablauf oder einen Ersatz-Normal-Befehlsablauf sowie die Fertigungsstraße in einen Zustand zu überführen, bei dein die aufgetretene Störung keine Rolle mehr spielt. Dabei wird in der Regel auch der tatsächliche Zustand der gesamten Fertigungsstraße in einen bestimmten definierten Zustand zu bringen sein.

Vorteilhafterweise werden die Störungen, die auftreten können, in unterschiedliche Störungsklassen eingeteilt, die dann zu einer bestimmten Therapierung der Störung führen, um die Störung zu bewältigen.

So können Störungen z.B. nicht umkehrbaren Abläufen zugeordnet sein, z.B. wenn Werkstücke oder Werkzeugmaschinen derart behandelt worden sind, daß sich keine Umkehrung dieses Prozesses erzielen läßt. So kann beispielsweise ein Werkstück fälschlicherweise durch Fräsen verarbeitet worden sein, Werkstücke können durch Verschweißen miteinander verbunden worden sein und dergleichen mehr, ohne daß dies einem beabsichtigten Fertigungsverlauf entspricht. Dies kann etwa auftreten, wenn in einer Fertigungsstraße, die für die Bearbeitung von verschiedenen Werkstückserien ausgebildet ist, eine Werkstückserie versehentlich nach dem Normal-Befehlsablauf eines anderen Werkstückes bearbeitet worden ist. Hierbei läßt sich die Störung offensichtlich am ehesten dadurch bewältigen, daß die fehlerhaften Werkstücke einfach aus dem Fertigungsprozeß herausgenommen und eventuell entsorgt werden, um anschließend mit dem regulären Prozeß fortfahren zu können.

Als nicht umkehrbare Störungen können ferner solche klassifziert werden, die dem Löschen einer Datei, beispielsweise eines Steuerprogramms, ohne Absicherung, dem Überschreiben einer Datei ohne Absicherung, usw. zuzuordnen sind. Geschieht dies, so kann beispielsweise, wenn ein Stromausfall für das Löschen sorgt, eine in einer Datenbank vorhandene Datei angefordert werden, um einen funktionsfähigen Zustand wiederherzustellen. Auch hierfür kann ein Fehler-Befehlsablauf entsprechend vorgesehen werden, der beispielsweise bei häufigem Auftreten von Fehlern einen fehlerhaften Befehlsablauf innerhalb eines Normal-Befehlsablaufs diagnostiziert, um dann das gespeicherte Programm zu einem Normal-Befehlsablauf eventuell zu löschen und durch eine Reserveversion aus einer Datenbank zu ersetzen. Um entsprechend verfahren zu können, kann ein häufiger aufgerufener Fehler-Befehlsablauf beispielsweise ein Protokoll führen, in dem eingetragen wird, welcher Fehler aufgetreten ist, ob dieser bewältigt werden konnte und wie dieser bewältigt werden konnte, wobei ein häufig auftretender Fehler beispielsweise zu dem Ergebnis führen kann, daß das Steuerprogramm, d.h. der Normal-Befehlsablauf, nicht fehlerfrei zu arbeiten vermag.

Eine weitere Klasse von Störungen betrifft die bedingt umkehrbaren Störungen, d.h. beispielsweise, wenn Daten gelöscht werden, zu denen unmittelbar eine Back-up-Datei existiert bzw. dementsprechend eine Datei überschrieben wird oder ein Format zerstört wird und zu dieser Datei bzw. diesem Format unmittelbar eine Sicherung vorhanden ist.

In einem Fertigungsprozeß können derart bedingt umgekehrbare Störungen beispielsweise Fehlern während des Transports eines Werkstückes zugeordnet werden, wenn etwa ein Werkstück fallengelassen wird, sich ein Werkstück auf einem Förderband verkeilt oder dergleichen mehr. Hier kann durch Wiederaufnehmen oder Rückwärtsabwickeln, unter Umständen mittels Eingriffs des Personals, der bereits vorgenommenen Tätigkeiten das fallengelassene Werkstück wieder aufgenommen werden, ein verkeiltes Werkstück wieder aus seiner verkeilten Lage befreit werden, und dergleichen mehr.

Eine weitere Klasse von Störungen ist den voll umkehrbaren Störungen zuzuordnen. Diese Klasse von Störungen umfaßt beispielsweise das Abgeben eines Befehls, der sich im Prinzip wiederholt abgeben läßt, das Setzen eines Signals, das wiederholt gesetzt werden kann usw. Entsprechend kann eine Werkzeugmaschine beispielsweise in einem automatischen Bohrfutter einen falschen Bohrer haben, der ein zu einem zu schneidenden Gewinde unpassendes Loch bohrt. Aufgrund des Maßes, auf das das Bohrfutter beim Einspannen des Bohrers zusammengefahren worden ist, kann die Werkzeugmaschine selbständig erkennen, daß ein nicht passender Bohrer eingesetzt worden ist und das Werkzeugmagazin mit dem automatischen Werkzeugwechsler kann dazu befehligt werden, einen anderen Bohrer in das Bohrfutter einzusetzen. Hierbei handelt es sich also um eine voll umkehrbare Störung.

Der Fehler-Befehlsablauf umfaßt dabei Informationen, die es ihm ermöglichen, eine Einordnung der Störung in die obigen Klassen vorzunehmen. Dabei kann in den oben genannten Störungsklassen noch eine feinere Einteilung vorgenommen werden, beispielsweise, wenn der Klasse der bedingt umkehrbaren Störungen Unterklassen zugeordnet werden, und zwar daß die aufgetretene bedingt umgekehrbare Störung innerhalb des Normal-Befehlsablaufs, in dem die Störung aufgetreten ist, nicht bewältigt werden kann und ein Ersatz-Normal-Befehlsablauf zur Bewältigung herangezogen werden muß bzw. daß die bedingt umkehrbare Störung durch Zurückgehen innerhalb der Befehlsabfolge des Normal-Befehlsablaufs und Überführen der realen Welt in einen bestimmten definierten Zustand oder die bedingt umkehrbare Störung nur durch Voranschreiten innerhalb des Normal-Befehlsablaufs und Einstellen eines bestimmten definierten Zustandes in der realen Welt bewältigt werden kann. Entsprechende Unterklassen können der Klasse der bedingt umkehrbaren Störungen zugeordnet werden. Gleichermaßen lassen sich auch die nicht umkehrbaren Störungen und die voll umkehrbaren Störungen in Unterklassen einteilen, die jeweils zu einer bestimmten Diagnose und Therapie zur Störungsbewältigung führen können.

Festzuhalten bleibt, daß die vorliegende Erfindung ein Werkzeug an die Hand gibt, um Störungen innerhalb eines Systems losgelöst von dem Befehlsablauf für die normale Funktion zu behandeln. Hierdurch kann ein Ablauf für eine normale Funktion transparent gehalten werden, da dieser im Prinzip keine Störungen zuzuordnenden Befehls- bzw. Programmabläufe enthalten muß. Natürlich ist es auch möglich, die vorliegende Erfindung kombiniert einzusetzen, indem nämlich ein Normal-Befehlsablauf für sehr einfache Störungen eine vergleichsweise übersichtliche Struktur aufweist, die zur Behebung einfacher Fehler herangezogen werden kann, während komplexere oder wiederholte einfache Störungen zum Aufruf des Fehler-Befehlsablaufs gemäß der vorliegenden Erfindung führen können. So kann beispielsweise der Fehlversuch eines Greifers, ein Werkstück zu greifen, innerhalb des Normal-Befehlsablaufs dazu führen, daß der Greifer initialisiert wird, um nochmals einen Greifversuch zu starten, weil eventuell die Bezugsachsen für den Greifer durch das fälschliche Ansprechen einer Sensorik nicht zutreffend initialisiert sind. Läßt sich die Störung hierdurch nicht bewältigen, kann ein Fehler-Befehlsablauf herangezogen werden, um eine Störungsdiagnose und eine Therapie zur Bewältigung der Störungssituation zu erarbeiten.

Eine weitere vorteilhafte Variante der Erfindung ergibt sich, wenn nach einer erfolglosen Behandlung einer Störung, beispielsweise in einem Kernkraftwerk, in komplexen Fertigungsstraßen oder dergleichen, die Kontrolle an ein übergeordnetes Netz übergeben wird, das dann im Störfall automatisch ein passendes Programm zur Deaktivierung ablaufen lassen kann, so daß Unfälle aufgrund von Übermüdung, Panik oder dergleichen des Personals vermieden werden können.

Nachfolgend wird die vorliegende Erfindung, die sich besonders auf Werkzeugmaschinen bezieht, anhand von vorteilhaften Ausführungsformen unter Bezug auf die anliegenden Figuren erörtert, wobei weitere Aufgaben, Vorteile und Merkmale gemäß der Erfindung offenbart werden, die insbesondere auch in Verbindung mit dem in der Beschreibungseinleitung Bezug genommenen Stand der Technik und bevorzugt den darin aufgeführten Daten- bzw. Programmstrukturen zum Gegenstand der vorliegenden Erfindung zu zählen sind. In den Darstellungen zeigen:
- Fig. 1: eine schematische Darstellung eines Netzes bzw. Systems mit Merkmalen gemäß der Erfindung;
- Fig. 2a bis 2c: eine Ausführungsform eines Systems mit Merkmalen nach der Erfindung;
- Fig. 3: eine Fortsetzung des linken Zweiges des Flußdiagrammes gemäß Fig. 2;
- Fig. 4: eine weitere Ausführungsform eines Systems mit Merkmalen gemäß der Erfindung in einer Notation der Petri-Netze.

Insoweit von Petri-Netzen gesprochen wird, wird darunter üblicherweise ein elementares Instanzennetz verstanden, d.h. ein Netz, in welchem alle Instanzen von einheitlichem, einfachem Typ sind. Der einzige Instanzentyp im Petri-Netz ist die Transition. Der Zustandswertebereich der Transition weist lediglich ein Element auf.

Es gibt weiterhin verallgemeinerte Petri-Netze, die umfangreichere Wertebereiche für die Anschlüsse ermöglichen. Bezüglich weiterer Begriffe zu Netzsystemen bzw. Petri-Netzen sei auf S. Wendt "Petri-Netze in der Automatisierungstechnik", E. Schneider, Oldenbourg, München, 1992, verwiesen.

Zu den häufig verwendeten Begriffen, wie etwa Störung, Fehler usw., sei auf die DIN 31051 verwiesen.

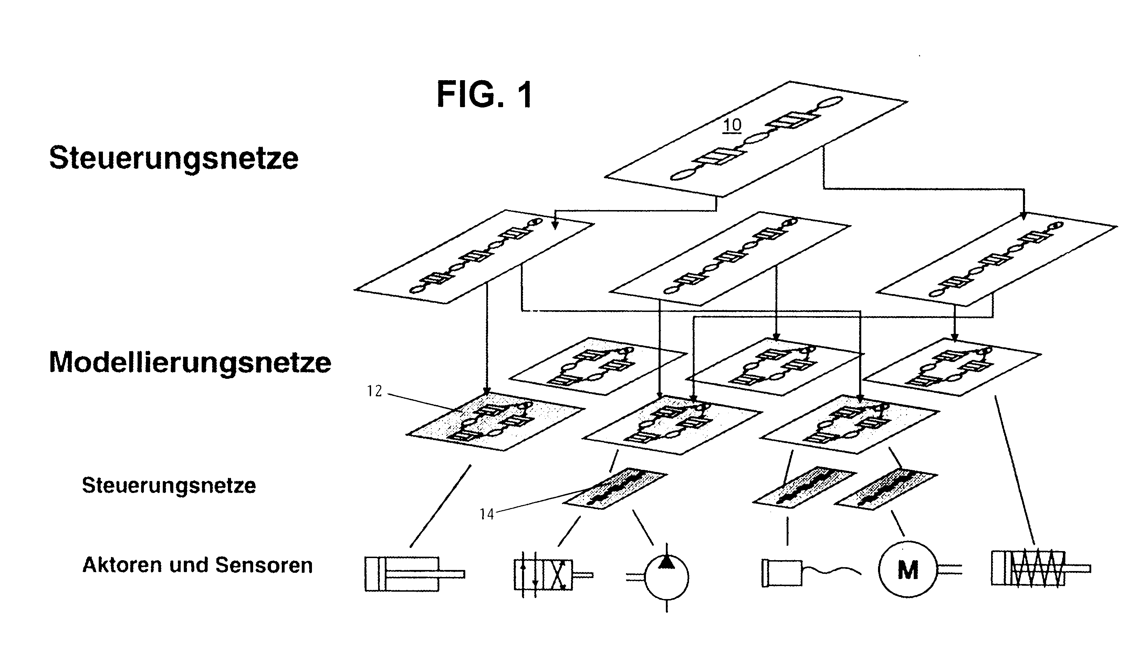

In Fig. 1 wird schematisch ein System mit Merkmalen gemäß der Erfindung dargestellt. Durch die Position 10 wird ein einem realen System zugeordnetes Steuerungsnetz bezeichnet, das beispielsweise in Form eines Petri-Netzes abgefaßt sein kann. Das Steuerungsnetz 10 kann dabei beispielsweise auf die Bedienung eines Werkzeuges, eines Fabrikhallentores oder dergleichen gerichtet sein.

Die nächste Ebene der schematischen Darstellung gemäß Fig. 1 zeigt diverse Modellierungsnetze 12, die zum Einsatz gelangen, insofern die reale Situation des zugeordneten Systems eine Modellierung des Steuerungsnetzes erfordert.

Steuerungsnetze 14 weisen eine Struktur auf, die dazu führt, daß bei Abarbeitung dieser Netze 14 wieder in die Netze 12 eingetreten wird, wobei von den Netzen 14 den Netzen 12 Informationen über den momentanen Zustand, in dem sich ein Aktor bzw. ein Sensor befindet, mitgeteilt wird. Ändert sich der Zustand des Aktors bzw. Sensors von neuem, werden neue Informationen übermittelt.

Bei Auftreten einer Störung kann ein Fehler-Befehlsablauf aufgerufen werden, der beispielsweise in Form der Modellierungsnetze vorgesehen sein kann oder aber zwischen den einzelnen Netzebenen 10, 12, 14 aufgerufen werden kann. um eine Fehleranalyse und einen alternativen Befehlsablauf zu initiieren.

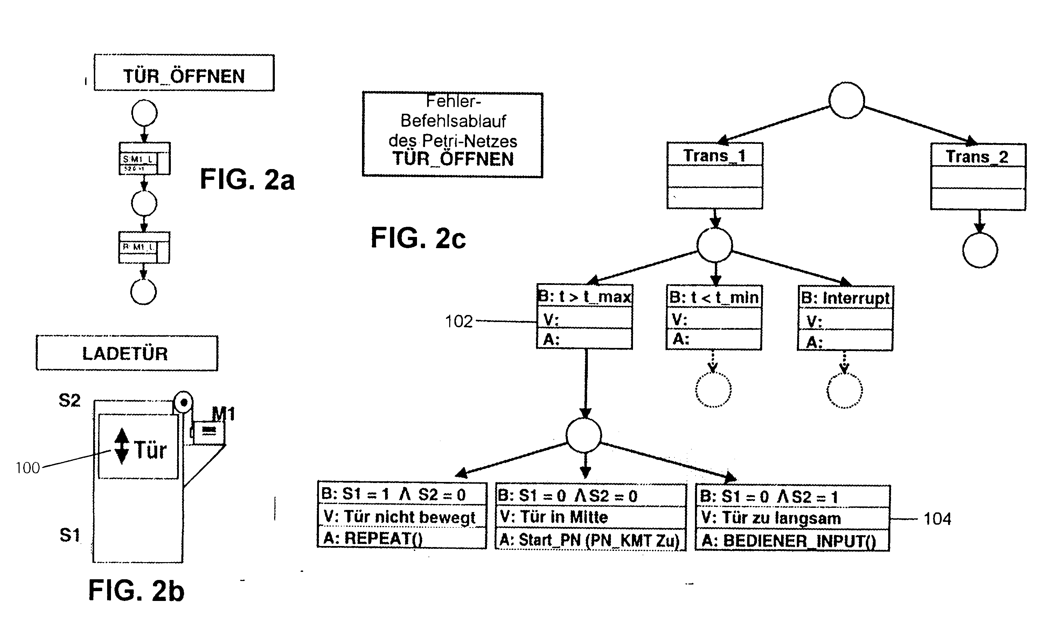

Eine erste einfache Ausführungsform mit Merkmalen gemäß der Erfindung wird anhand der Fig. und 3 unter Bezugnahme auf die Betätigung einer Ladetür beschrieben. Das Steuerungsnetz gemäß Fig. 2a zeigt einen Ablauf, um die Ladetür 100 von einer unteren Position, in der ein Sensor S1 die Stellung der Tür erfaßt, in eine obere Position, in der ein Sensor S2 die Stellung der Tür 100 erfaßt, zu überführen. Der Motor M1 gemäß Fig. 2b dient als Antrieb, um die Tür in die durch die Steuerung gemäß Fig. 2a veranlaßte Position zu bewegen.

Wird der Normal-Befehlsablauf "Tür öffnen", gemäß Fig. 2a durchgeführt, so kann es zu Störungen kommen. Beispielsweise kann der Motor M1 gemäß Fig. 2b einer Störung unterliegen oder die Tür 100 kann verklemmt sein. Die Tür 100 kann sich zu langsam in die angestrebte obere Position bewegen bzw. vollkommen festgefahren sein.

In der zweiten Transitionsebene gemäß Fig. 2c sind verschiedene Bedingungen abfragbar, die dann zu einer Verzweigung in der Vorgehensweise in dem Fehler-Befehlsablauf gemäß Fig. 2c führen können. So kann aufgrund einer Zeitüberschreitung ein Fehler festgestellt werden. Ist die Zeit t, die seit der Erteilung eines Befehls an den Motor M1 zum Anheben bzw. Öffnen der Tür vergangen ist, größer als eine maximale Zeit t_max, so ist mit größter Wahrscheinlichkeit ein Fehler bzw. eine Störung aufgetreten, die dazu geführt hat, daß die Tür nicht in die prinzipiell zu erwartende obere Position gemäß Fig. 2b angehoben worden ist.

Natürlich gibt es noch andere denkbare Werte für B, d.h. für die Bedingung, z.B. daß t kleiner als eine minimale Zeit t_min ist, was beispielsweise bedeuten könnte, daß die Tür bereits in der oberen Position ist bzw. daß der obere Sensor S2 defekt ist. Ferner ist es möglich, daß auch eine Bedingung "Interrupt" existiert, die beispielsweise einer Sicherungsschaltung entsprechen könnte, wonach die Tür aus irgendwelchen Gründen gesperrt ist, so daß der Normal-Befehlsablauf, d.h. das normale Steuerungsnetz, nicht abgearbeitet werden kann.

Über die zwischen den Transitionsebenen 102 und 104 vorgesehene Stelle gelangt der Fehler-Befehlsablauf zu weiteren Bedingungen, deren Existenz zu prüfen ist. So können Bedingungen vorhanden sein, die zum Durchschalten einer Transition führen, wie z.B., daß der Sensor S1 den Wert 1 anzeigt und der Sensor S2 den Wert 0 anzeigt. Dies wäre damit gleichzusetzen, daß sich die Tür nicht bewegt hat. In diesem Fall könnte diese Transition geschaltet werden und dazu führen, daß der Normal-Befehlsablauf gemäß Fig. 2a nochmals durchlaufen wird, um dann eventuell zu dem gewünschten Ergebnis zu führen.

Des weiteren ist es gemäß der in der Transitionsebene 104 mittig angeordneten Transition möglich, daß beide Sensoren S1, S2 den Wert 0 anzeigen, so daß anzunehmen ist, daß die Tür in einer Mittenposition steckt. Diese Diagnose führt ebenfalls zu einem verzweigten Fehler-Unterbefehlsablauf, der in diesem Beispiel jedoch nicht weiter betrachtet werden soll.

Weiterhin ist es möglich, daß nach Ablauf der Zeit t_max doch noch die Bedingung eingetreten ist, daß der Sensor S1 den Wert 0 anzeigt und der Sensor S2 den Wert 1 annimmt, was dann bedeutet, daß die Tür zu langsam hochgefahren ist. Dies kann ebenfalls zu einem bestimmten Fehler-Unterbefehlsablauf führen, der an dieser Stelle ebenfalls nicht weiter diskutiert werden soll. Es sei nur angedeutet, daß beispielsweise von dem Bedienungspersonal eine Eingabe angefordert werden kann, etwa, daß die Tür nicht abermals zu bewegen ist, weil sie gewartet werden muß, beschädigt bzw. verzogen ist, oder dergleichen mehr, was dazu führen kann, daß die Motorkraft des Motors M1 die Tür zwar noch bewegen kann, jedoch nicht innerhalb der eingeräumten maximalen Zeit t_max.

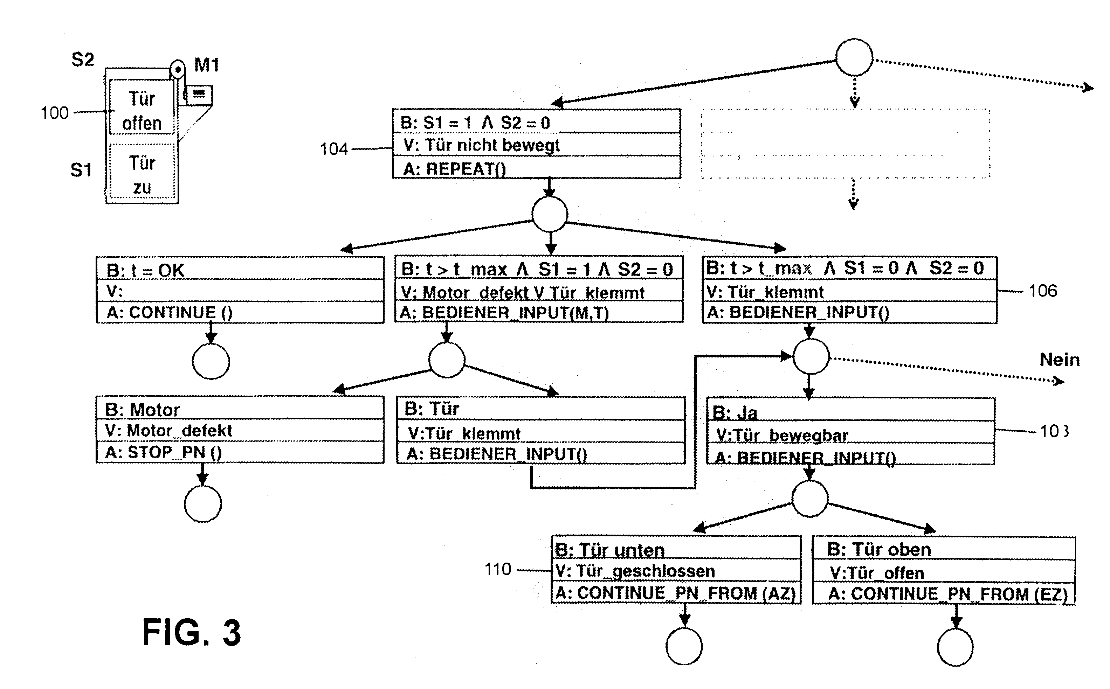

Im folgenden soll die vorliegende Ausführungsform eines Systems mit Merkmalen nach der Erfindung lediglich anhand der Transition weiterverfolgt werden, die der Bedingung mit S1 = 1 sowie S2 = 0 genügt, d.h. die Tür ist nicht bewegt worden, wobei diese Transition gemäß der Transitionsebene 104 in Fig. 3 ausgeführt ist und deren Folgestellen sowie -transitionen gemäß den Transitionsebenen 106, 108 und 110 in Fig. 3 des weiteren ausgeführt werden.

In Fig. 3 folgt auf die Transitionsebene 104 eine Stelle, die zu mehreren Transitionen mit verschiedenen Bedingungen gemäß der Transitionsebene 6 führt. Diese Bedingungen beziehen sich nun auf die in 104 durchgeführte Wiederholung der gestörten Transition, d.h., die Bedingungen der Transitionsebene 6. Die linke äußere Transition der Transitionsebene 106 enthält die Bedingung, daß die Zeit, die die Tür hatte, um sich zu öffnen bzw. die obere geöffnete Position am Sensor S2 zu erreichen, zutraf, so daß über die folgende Stelle wieder in den Normal-Befehlsablauf eingetreten wird, da für diesen Fall beispielsweise aufgrund irgendeines hier nicht näher bestimmten Fehlers der Fehler-Befehlsablauf aufgerufen worden ist, der Fehler jedoch behoben werden konnte.

Für die Bedingung, daß die maximale Zeit t_max überschritten worden ist und der Sensor S1 den Wert 1 anzeigt sowie der Sensor S2 den Wert 0 anzeigt, ist es möglich, daß die Verknüpfüng besteht, daß der Motor defekt ist oder die Tür klemmt. Für diesen Fall kann der Bediener weiter in den Entscheidungsprozeß einbezogen werden. Natürlich kann das gesamte System für einen solchen Fall auch komplizierter ausgebildet sein, beispielsweise indem der Motor M1 über ein mechanisches Federglied an der Tür angreift, um einen Wert über einen Sensor des mechanischen Federgliedes abzugeben, der anzeigt, ob der Motor eine Kraft ausübt, die zur Bewegung der Tür führen müßte. Ein solcher Wert könnte als weiteres Entscheidungskriterium dazu herangezogen werden, um eine Bedingung zu ergeben, deren NichtExistenz bedeutet, daß der Motor defekt ist oder deren Existenz bedeutet, daß die Tür klemmt.

Im vorliegenden Fall wird jedoch der Bediener zu einer Eingabe aufgefordert, aufgrund derer die Bedingungen der Transitionen der Folgeebene 108 bereitgestellt werden können, um die Transitionen der Transitionsebene 108 zu schalten.

Ist beispielsweise gemäß der äußersten linken Transition der Transitionsebene 108 der Motor defekt, so wird der Fehler-Befehlsablauf eine Deaktivierung des Systems veranlassen und anzeigen, daß eine Reparatur des Motors erforderlich ist, eine Warnlampe an der Tür leuchtet, oder dergleichen mehr. Für den Fall, daß die Tür klemmt, kann der Bediener eine weitere Eingabe in das System eingeben, nämlich ob die Tür bewegbar ist oder nicht. Für diesen Fall schaltet die mittlere Transition der Transitionsebene 108 in der gleichen Transitionsebene weiter, um zu einer Transition zu gelangen, die mehrfach verwendet werden kann, nämlich, wenn gemäß der Transitionsebene 106, rechte Transition, die Bedingung erfüllt ist, daß die maximale Zeit t_max überschritten ist, der Sensor S1 den Wert 0 anzeigt und der Sensor S2 den Wert 0 anzeigt, was unmittelbar bedeuten würde, daß die Tür in einer mittleren Position zwischen den beiden Sensoren S1, S2 festklemmt bzw. sich zwar bewegt, jedoch aufgrund einer Verklemmung nicht mit der Geschwindigkeit, die dem Normalzustand des Systems entspricht.

In dem vorliegenden Beispiel kann der Bediener dann in der äußeren rechten Transition der Transitionsebene 108 wiederum eine Eingabe tätigen, insofern die Tür bewegbar ist, daß nämlich entweder die Bedingung erfüllt ist, daß die Tür in der unteren Position ist oder aber die Tür in der oberen Position ist, so daß der Normal-Befehlsablauf gemäß Fig. 2a fortgesetzt werden kann, und zwar entweder ausgehend vom Ausgangszustand (AZ), d.h., daß die Tür geschlossen ist, oder vom Endzustand (EZ), d.h., die Tür ist oben bzw. geöffnet.

Damit konnte im vorliegenden Falle unter Einbeziehung von Bedienungspersonal eine Störung durch einen Fehler-Befehlsablauf bewältigt werden, ohne daß der Normal-Befehlsablauf gemäß Fig. 2a mit irgendwelchen zusätzlichen Abfragen, alternativen Abläufen und dergleichen belastet worden ist.

Wie bereits bemerkt, ist es natürlich möglich, den Bediener stärker in sämtliche Betrachtungen einzubeziehen bzw. den Bediener durch eine komplexere Sensorik und/oder dergleichen weitgehender oder vollständig überflüssig zu machen.

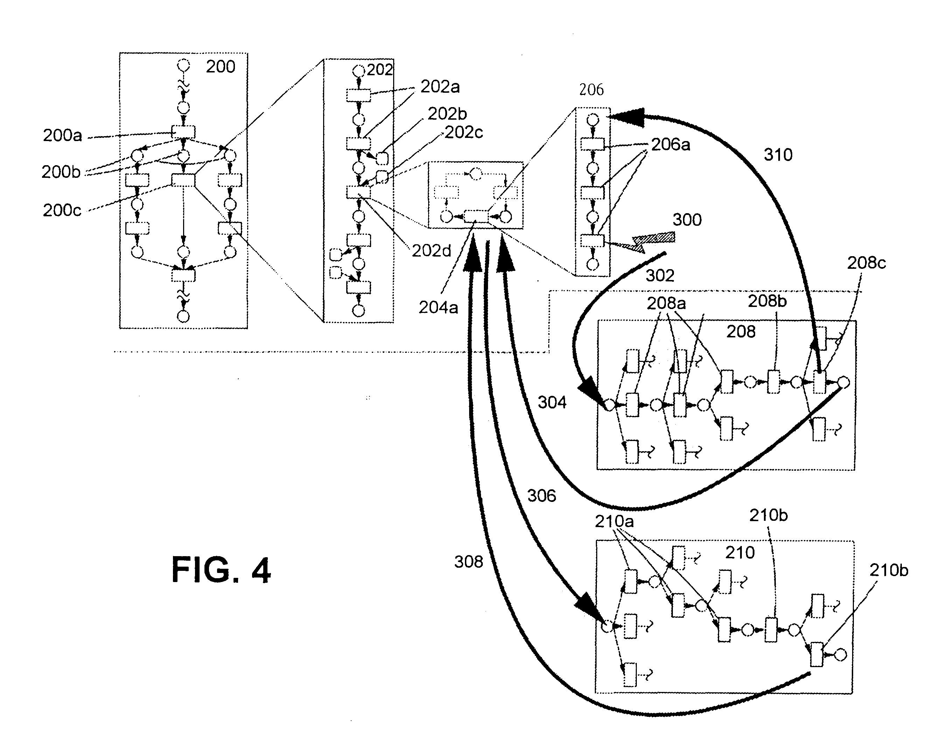

In der Fig. 4 wird schematisch ein weiteres System mit Merkmalen nach der Erfindung dargestellt. Das zugehörige reale System entspricht einer Werkzeugmaschine, bei der ein Werkzeugwechsel vorzunehmen ist, beispielsweise ein Bohrer in ein Bohrfutter einzusetzen ist, ein Fräswerkzeug auszutauschen ist, oder dergleichen mehr.

Die Position 200 zeigt ein Petri-Netz, das zu einem Werkzeugwechsel gehört, wobei dieses Petri-Netz 200 ausgehend von einem Systemsteuer-Befehlsablauf (nicht dargestellt) angesteuert werden kann. Ausgehend von einer bestimmten Transition in dem Werkzeugwechsel-Petri-Netz kann zu einem bestimmten, passenden Unterprogramm in Form eines Petri-Netzes übergegangen werden, hier ein Petri-Netz 202 zum Austauschen eines Werkzeuges. Dem Werkzeugwechsler ist ein in sich geschlossenes Petri-Netz zugeordnet, dem der Zustand des Werkzeugwechslers zu entnehmen ist, das als Modellierungsnetz 204 realisiert werden kann. Dieses Modellierungsnetz 204 ist komponentenorientiert auf die Bedürfnisse des Werkzeugwechslers gerichtet und gibt sämtliche Zustände einer Komponente, hier des Werkzeugwechslers, wieder. Dieses Modellierungsnetz weist eine Initialisierungsstelle auf, von der aus auf das Modellierungsnetz zugegriffen werden kann, wobei jedoch die Komponente, hier der Werkzeugwechsler, einen beliebigen Zustand innerhalb des Modellierungsnetzes zu einem vorgegebenen Zeitpunkt einnehmen kann. Das Modellierungsnetz ist derart aufgebaut, daß ein Warten in den Stellen (Kreise) im Modellierungsnetz möglich ist und eine nachfolgende Transition (Vierecke) vorerst nicht geschaltet wird, solange der Werkzeugwechsler bzw. das Modellierungsnetz keine Befehle erhalten, um den jeweils gemeinsamen Zustand zu ändern.

An das Modellierungsnetz 204 schließt wiederum ein Sub-Befehlsablauf 206 an, der auf bestimmte Tätigkeiten gerichtet ist, die mit einer bestimmten Transition im Modellierungsnetz 204 verknüpft sind. So kann beispielsweise das Schalten einer Transition im Modellierungsnetz bestimmte Tätigkeiten von Aktoren und Einstellungen von Sensoren erfordern, die zu der Komponente, d.h. hier der Werkzeugwechsler, des Modellierungsnetzes 204 gehören. Im Sub-Befehlsablauf 206 tritt an der mit dem Bezugszeichen 300 gekennzeichneten Stelle eine Störung auf, die dann zum Aufruf von Fehler-Befehlsabläufen 208 bzw. 210 führen. Dabei handelt es sich bei dem mit dem Bezugszeichen 208 bezeichneten Petri-Netz um einen Ablauf zur Störungsbehandlung beim Werkzeugwechseln und bei dem Petri-Netz 210 um einen Fehler-Befehlsablauf zur Störungsbehandlung der Komponente Werkzeugwechsler bzw. des Modellierungsnetzes 204.

Zu der nachfolgenden Erläuterung sei vorausgeschickt, daß es dabei nicht um die speziellen Abläufe geht, sondern lediglich um die prinzipiellen Abläufe bei einem System mit Merkmalen gemäß der Erfindung. Prinzipiell kann jeder Transition ein bestimmter Folgeablauf zugeordnet sein bzw. können Transitionen Folgeabläufe bzw. Fehler-Befehlsabläufe teilen, wobei diese jeweils aufgrund der Abfrage bestimmter Bedingungen für verschiedene Transitionen und deren Fehlerdiagnose und der zugehörigen Störungsbewältigung diversifiziert werden können, so daß viele einfache Fehler-Befehlsabläufe zu vielen Transitionen in einer entsprechenden Anzahl bereitzustellen sind. Es könnte aber auch nur wenige bzw. sogar nur ein einziger Fehler-Befehlsablauf vorgesehen sein, wobei diese dann jedoch relativ komplex ausgestaltet sein müssen.

In dem zum Werkzeugwechsel gehörenden Petri-Netz 200 sind diverse Transitionen 200a, 200c usw. vorhanden, die vom Prinzip in ihrer speziellen Zweckbestimmung wenig interessant sind. So kann beispielsweise bei dem Einzelschritt 200a ein Vorgang ausgeführt werden, durch den die Tür zum Arbeitsraum des Werkzeugwechslers geöffnet wird. Dabei können dann ausgehend von dieser Transition unterschiedliche Möglichkeiten für die Stellen 200b vorgesehen sein, um in den Aktionen fortzuschreiten. So kann beispielsweise bei der Position 200b, links, ein Werkzeug in das Magazin abgegeben werden, wenn der dieser Stelle zugeordnete Zweig des Petri-Netzes abgearbeitet wird. Bei der der mittleren Stelle 200b zugeordneten Abfolge kann ein Werkzeug ausgetauscht werden und bei der der rechten Seite zugeordneten Stelle 200b kann ein Werkzeug in eine Spindel der Werkzeugmaschine abgegeben werden.

Im vorliegenden Falle werden der rechte und der linke Ast des Petri-Netzes 200 nicht weiter in Betracht gezogen, sondern als Beispiel wird lediglich der mittlere Ast bzw. Zweig des Petri-Netzes 200 ausgehend von der Transition 200c weiterverfolgt. Ausgehend von dieser Transition 200c wird eine Kaskadierung vorgenommen, d.h. ein Unterprogramm ebenfalls in Form eines Petri-Netzes wird abgearbeitet, um, wie der Befehl lautet, ein Werkzeug auszutauschen. Bei den nachfolgenden Transitionen 202a kann beispielsweise der Wechsler dazu veranlaßt werden, ein Werkzeug zu greifen und daraufhin den Werkzeugwechsler zu verriegeln, d.h. das Werkzeug nicht mehr freizugeben. Sodann wird in der Position 200b eine Zustandsbeschreibung vorgenommen, die zur Synchronisation herangezogen werden kann. Dabei wird die Spindel der Werkzeugmaschine entriegelt und es wird anschließend bei der Zustandsbeschreibung 202c die Bedingung erzeugt, daß die Spindel entriegelt ist.

Daraufhin kann die Transition 202d eingeleitet werden, die dazu führt, daß das Modellierungsnetz 204 aufgerufen wird, aus dem der aktuelle Zustand des Wechslers ersichtlich ist und aus dem heraus wiederum Sub-Befehlsabläufe, hier der Befehlsablauf gemäß dem Petri-Netz 206, abgearbeitet werden können. So werden, um den Wechsler bzw. das Modellierungsnetz 204 in den Zustand gemäß der Transition 204a zu versetzen, verschiedene Aktoren bzw. Sensoren betätigt bzw. abgefragt, die gemäß dem Petri-Netz 206 zu behandeln sind.

Demgemäß werden bei dem Vorgang zum Werkzeugwechseln gemäß dem Petri-Netz 206 zunächst der Werkzeugwechsler ausgerückt, anschließend der Werkzeugwechsler um 180 Grad geschwenkt und ferner der Werkzeugwechsler wieder eingerückt. Nun verlangt die letzte Transition 206a in der Abfolge gemäß dem Petri-Netz 206 als Bedingung für die Schaltung der letzten Transition 206a die Einhaltung einer maximalen Zeit, die für den Werkzeugwechsler vorveranschlagt ist.

An dieser Stelle tritt nun ein Fehler 300 auf, der dazu führt, daß aufgrund der Zeitüberschreitung der Transition eine Störung erkannt wird, die dann zum Aufbau eines Fehler-Befehlsablaufes zu dem Petri-Netz 206 führt, das zum Werkzeugwechseln vorgesehen ist. Dementsprechend wird das Programm über den Pfad 302 in den Fehler-Befehlsablauf 208 überführt.

Gemäß dem Fehler-Befehlsablauf 208, der ebenfalls ein Petri-Netz repräsentiert, wird zunächst eine Störungslokalisierung vorgenommen, indem gemäß den Transitionen 208a zunächst bestimmt wird, ob die Störung bei der Tätigkeit zum Einrücken des Werkzeugwechslers aufgetreten ist, ob die Störung unmittelbar in der Zeitüberschreitung zu erkennen ist, bzw. ob der Werkzeugwechsler während der befehligten Aktionen mit Energie versorgt worden ist. Das Vorhandensein der zu der Schaltung dieser Transitionen erforderlichen Bedingung führt dann zu der Abarbeitung des Netzes 208 zu der Transition 208b, wonach eine Umkehrung der bislang vorgenommenen Aktionen bis zum Anfang des Petri-Netzes 206 zum Werkzeugwechseln vorgenommen werden soll. Sodann wird eine Verzweigung an der der Transition 208b folgenden Stelle vorgenommen, wonach gemäß der Transition 208c über den Pfad 310 wieder in das Petri-Netz 206 eingestiegen wird und dieses von Anfang an abgearbeitet wird.

Gleichermaßen wird von der der Transition 208c folgenden Stelle ein Pfad 304 zu dem Modellierungsnetz 204 eingerichtet, um dem Modellierungsnetz 204 eine Störungsmeldung zuzuleiten und den Fehler-Befehlsablauf 208 zu beenden. Aufgrund der Störungsmeldung wird bei der Transition 204a im Modellierungsnetz 204 ein Pfad zur Meldung einer Störung durch ein untergeordnetes Netz, hier das Petri-Netz 208, aufgebaut, um einen Fehler-Befehlsablauf zu dem Modellierungsnetz 204 bereitzustellen und abzuarbeiten.

Der weitere Fehler-Befehlsablauf 210 schaltet zunächst verschiedene Transitionen 210a zur Störungslokalisierung, wobei erkannt wird, daß die Störung beim Werkzeugwechseln aufgetreten ist, die Störungsmeldung durch ein untergeordnetes Netz veranlaßt worden ist, und die von dem untergeordneten Netz 208 veranlaßte Umkehrung bzw. die umgekehrte Abarbeitung erfolgreich war.

Sodann kann entweder über einen Dialog mit dem Bedienungspersonal der betreffenden Werkzeugmaschine oder aber über entsprechend aufgebaute Automatismen veranlaßt werden, daß Fehlerquellen überprüft und gegebenenfalls beseitigt werden, indem beispielsweise Späne an Werkzeugen und Wechsler entfernt werden, Endschalter kontrolliert werden, und/oder dergleichen mehr. Der Benutzer oder die Ausführung der betreffenen Wartungs- bzw. Überarbeitungsarbeiten kann dazu führen, daß der Betrieb fortgesetzt wird. Sodann kann wiederum ein Funktionsaufruf erfolgen, wonach der Wechsler zum Wechseln von Werkzeugen bzw. eines Werkzeuges veranlaßt wird. Zugleich wird eine Beendigung des Netzes 210 zur Störungsbehandlung für das Modellierungsnetz 204 angezeigt. Das Wechseln des Werkzeuges kann fortgesetzt werden und nun erfolgreich abgeschlossen werden, wobei von dem Modellierungsnetz 204 Informationen zu einer entsprechenden Bedingung erstellt werden, die die Transition 204a schalten sowie die Transition 202d des Netzes 202 schalten, so daß letztendlich das Petri-Netz 202 zum Werkzeugaustauschen beendet werden kann, so daß aufgrund der Einhaltung bestimmter Bedingungen die Transition 208c geschaltet werden kann, wobei das Petri-Netz 200 folglich beendet werden kann und es beispielsweise wieder in ein Gesamtnetz zur Steuerung der betreffenden Werkzeugmaschine übergegangen werden kann.

Zusammenfassend ist festzuhalten, daß auch bei diesem System mit Merkmalen gemäß der Erfindung vorteilhafterweise innerhalb eines Programmablaufes, der einem Normal-Befehlsablauf für eine Realumgebung, beispielsweise eine Maschine, insbesondere Werkzeugmaschine entspricht, dieser nicht durch Alternativen, Verzweigungen etc. belastet werden muß, um eventuell auftretende Störungen beheben zu können, eine Umkehrung eines Handlungsablaufes bzw. eines Petri-Netzes durchgeführt wird, indem beispielsweise Bedienungspersonal alarmiert wird und bei der Störungsbeseitigung mit einbezogen wird, und dergleichen mehr. Gemäß der Erfindung ist es möglich, äußerst komplexe, nahezu unüberschaubare Steuerungsprogramme zu vereinfachen bzw. überhaupt erst zu ermöglichen.

Während die Erfindung anhand bevorzugter Ausführungsbeispiele beschrieben worden ist, ist es nicht der Zweck der vorangehenden Figurenbeschreibung, die Erfindung auf die wiedergegebenen Ausführungsformen zu beschränken, sondern lediglich einen Einblick in das Prinzip eines Systems mit Merkmalen nach der Erfindung zu gewähren.

## Patentansprüche

1. System mit wenigstens einem Steuerabschnitt zur Abarbeitung mindestens eines Normal-Befehlsablaufes, mit:
a) mindestens einem Eingabeabschnitt, über den Befehle und/oder Daten eingebbar sind;
b) mindestens einem Ausgabeabschnitt zur Ausgabe von Befehlen und/oder Daten;
c) einem Fehler-Steuerabschnitt zur Abarbeitung eines Fehler-Befehlsablaufs, wenn bei der Abarbeitung des Normal-Befehlsablaufs der Fehler-Befehlsablauf aufgerufen wird, wobei der Fehler-Befehlsablauf im wesentlichen von dem Normal-Befehlsablauf losgelöst arbeitet, um den Normal-Befehlsablauf wieder einsetzbar zu machen;
dadurch **gekennzeichnet**, daß:
d) das System mindestens eine Komponente mit mindestens einem Aktor aufweist, um auf die reale Welt einzuwirken, um diese zu verändern oder mit einem vorgebbaren Zustand im Normal-Befehlsablauf, im Fehler-Befehlsablauf und/oder im Ersatz-Normal-Befehlsablauf zur Koinzidenz zu bringen, wobei der Komponente ein Modellierungsnetz zugeordnet ist, das Informationen und/oder Daten über den aktuellen Zustand der Komponente enthält, wobei das Modellierungsnetz insbesondere als Petrinetz ausbildbar ist, bei dem jeder übergeordnete, interessante Zustand der Komponente einer Stelle zugeordnet ist und das Modellierungsnetz seinen Zustand nicht verändert, wenn die zugeordnete Komponente ihren Zustand nicht verändert, wobei
e) das Modellierungsnetz bzw. Petrinetz seinen Zustand erst zu verändern vermag, wenn eine Bedingung zu einem Ereignis paßt und infolge dieser Koinzidenz eine Transition durchführbar ist, wenn der zugeordnete Aktor seinen Zustand ändert.

2. System nach Anspruch 1, dadurch **gekennzeichnet**, daß unterschiedlichen Normal-Befehlsabläufen unterschiedliche Einstiegsbereiche bzw. -adressen in einem Fehler-Befehlsablauf und/oder unterschiedliche Fehler-Befehlsabläufe zugeordnet sind.

3. System nach einem der Ansprüche 1 oder 2, dadurch **gekennzeichnet**, daß von dem Normal-Befehlsablauf im Falle des Aufrufs des Fehler-Befehlsablaufs ein Datensatz an diesen übergeben wird, aufgrunddessen der Fehler-Befehlsablauf eine Abstimmung vornimmt, um den Normal-Befehlsablauf wieder einsetzbar zu machen.

4. System nach einem der Ansprüche 1 bis 3, dadurch **gekennzeichnet**, daß der Normal-Befehlsablauf angehalten wird, wenn der Fehler-Befehlsablauf aufgerufen wird bzw. daß der Normal-Befehlsablauf von dem Fehler-Befehlsablauf angehalten wird.

5. System nach einem der Ansprüche 1 bis 4, dadurch **gekennzeichnet**, daß der Fehler-Befehlsablauf den Normal-Befehlsablauf in einen vorgebbaren Zustand versetzt.

6. System nach einem der Ansprüche 1 bis 5, dadurch **gekennzeichnet**, daß der Fehler-Befehlsablauf den aktuellen Befehls- und/oder Datenzustand, in dem sich der Normal-Befehlsablauf befindet, analysiert, um entweder den Normal-Befehlsablauf modifiziert wieder aufzurufen oder einen Ersatz-Normal-Befehlsablauf aufzurufen, um dem aufgerufenen Befehlsablauf einen Befehls- und/oder Datensatz zu übergeben, der den aufgerufenen Befehlsablauf einsetzbar macht.

7. System nach einem der Ansprüche 1 bis 6, dadurch **gekennzeichnet**, daß das System weiter aufweist:
- wenigstens einen Sensor, um Zustandsparameter über die reale Welt zu erhalten.

8. System nach Anspruch 7, dadurch **gekennzeichnet**, daß die Sensoren Informationen bzw. Daten über die reale Welt und/oder Befehle erzeugen, die wenigstens einem der verschiedenen Befehlsabläufe übergebbar sind.

9. System nach einem der Ansprüche 7 oder 8, dadurch **gekennzeichnet**, daß das System bzw. die Sensoren den Aktoren, bzw. den Komponenten mit gegebenenfalls mehreren Aktoren, Daten und/oder Befehle übermittelt, um auf die reale Welt einzuwirken, und/oder die Aktoren bzw. Komponenten Daten und/oder Befehle an wenigstens einen der verschiedenen Befehlsabläufe übergeben, die Informationen über den aktuellen Zustand des jeweiligen Aktors/der Aktoren bzw. Komponente(n) enthalten.

10. System nach einem der vorhergehenden Ansprüche, dadurch **gekennzeichnet**, daß wenigstens einer der verschiedenen Befehlsabläufe, bevorzugt alle, auf das bzw. die Modellierungsnetz(e) zuzugreifen vermag.

11. System nach einem der Ansprüche 1 bis 10, dadurch **gekennzeichnet**, daß der Fehler-Befehlsablauf von dem und/oder den ihm zugeordneten Normal-Befehlsablauf im Falle des Auftretens einer Störung Informationen über den aktuellen, fehlerhaften Zustand des Systems übergeben erhält.

12. System nach Anspruch 11, dadurch **gekennzeichnet**, daß die Informationen über den aktuellen fehlerhaften Zustand insbesondere herrühren von wenigstens einer der folgenden Meldungen:
- Meldungen von einem Bediener,
- Meldungen von einem aktiven Sensor, der Signale abgibt,
- Meldungen von einem passiven Sensor, von dem Signale abgefragt werden,
- Meldungen von einer intelligenten Komponente,
- Meldungen durch eine Zeitüberwachung.

13. System nach einem der Ansprüche 1 bis 12, dadurch **gekennzeichnet**, daß eine Lokalisierung einer Störung erfolgt, indem eine Störung zu einer Position in einem Normal-Befehlsablauf bzw. einem Ersatz-Normal-Befehlsablauf, insbesondere bei der Verwendung von Petrinetzen, einer Transition, zugeordnet wird.

14. System nach einem der Ansprüche 1 bis 13, dadurch **gekennzeichnet,** daß die Störungen wenigstens gemäß den folgenden Störungsklassen unterschieden werden:
- nicht umkehrbare bzw. zu beseitigende Störungen,
- bedingt umkehrbare bzw. zu beseitigende Störungen,
- voll umkehrbare bzw. zu beseitigende Störungen.

15. System nach Anspruch 14, dadurch **gekennzeichnet**, daß aufgrund der Störungsklasse im Fehler-Befehlsablauf ein Ablauf erfolgt, der wenigstens einen der folgenden Punkte umfaßt:
a) eine Position bzw. Positionen im Normal-Befehlsablauf wird bzw. werden in vorwärts gerichteter Abarbeitungsfolge des Normal-Befehlsablaufs angesteuert und die reale Welt wird, soweit erforderlich, den Bedingungen dieser Position/Positionen angepaßt, beispielsweise, indem Aktoren in Zustände versetzt werden, die zu der Position/Positionen im Normal-Befehlsablauf passen;
b) eine Position bzw. Positionen im Normal-Befehlsablauf wird bzw. werden in rückwärts ausgerichteter Abarbeitungsfolge des Normal-Befehlsablaufs angesteuert und, soweit erforderlich, wird die reale Welt dieser Position/Positionen angepaßt;
c) ein Ersatz-Normal-Befehlsablauf wird angesteuert bzw. aufgerufen, wobei die reale Welt mit der Einstiegsposition in den Ersatz-Normal-Befehlsablauf in Einklang gebracht wird;
d) der Normal-Befehlsablauf wird angehalten.

16. System nach einem der Ansprüche 1 bis 15, dadurch **gekennzeichnet**, daß die Befehlsabläufe als kaskadierte Abläufe aufgebaut sind.

17. System nach einem der Ansprüche 1 bis 16, dadurch **gekennzeichnet**, daß die Ablaufstruktur wenigstens eines der verschiedenen Befehlsabläufe die eines Petrinetzes ist.

18. System nach Anspruch 17, dadurch **gekennzeichnet**, daß das Petrinetz ein einseitig offenes Petrinetz ist, wobei aufgrund des Erreichens eines oder mehrerer Punkte und insbesondere Endpunkte im Petrinetz ein Ablauf gemäß Anspruch 17 erfolgt.

19. System nach einem der Ansprüche 1 bis 18, dadurch **gekennzeichnet**, daß der Fehler-Befehlsablauf auf Datenfelder bzw, normale Netze, insbesondere Modellierungsnetze, zugreift, um Informationen zur Störungsbewältigung bzw. Störungsdiagnose und/oder Störungstherapie zu erhalten.

20. System nach einem der Ansprüche 1 bis 19, dadurch **gekennzeichnet**, daß das Bedienungspersonal in die Störungsbeseitigung einbeziehbar ist.

21. System nach einem der Ansprüche 1 bis 20, dadurch **gekennzeichnet**, daß das System eine computergesteuerte Werkzeugmaschine oder dergleichen aufweist.

22. System nach einem der Ansprüche 1 bis 21, dadurch **gekennzeichnet**, daß über aufgetretene Störungen ein Protokoll geführt wird, das zur Entscheidungsfindung, wie bei Auftreten einer Störung zu verfahren ist, heranziehbar ist, wobei etwa die Häufigkeit eines bestimmten Störungsereignisses, die Reihenfolge bestimmter Störungsereignisse usw, zur Entscheidungsfindung heranziehbar sind, um beispielsweise bei dem mehrfachen Auftreten der gleichen Störung verschieden zu reagieren.

23. Verfahren zur Bewältigung einer Störung, wobei:
a) ein Normal-Befehlsablauf durchgeführt wird, währenddessen eine Diskrepanz zwischen einem Soll-Zustand und einem Ist-Zustand einer Komponente mit einem Aktor auftritt;
b) ein Fehler-Befehlsablauf bei Auftreten der Störung aufgerufen wird, der die Störung aufgrund von Daten analysiert, die vom Normal-Befehlsablauf und/oder Aktoren und/oder Sensoren durch den Fehler-Befehlsablauf ermittelt werden;
dadurch **gekennzeichnet**, daß:
c) den Aktoren Modellierungsnetze zugeordnet sind, die entsprechend dem Zustand eines Aktors in einem bestimmten Datenzustand verharren, der sich erst passend zur Zustandsänderung ändert, wenn der tatsächliche Zustand des Aktors geändert wird, wobei bevorzugt auf jedes Modellierungsnetz von wenigstens einem von den verschiedenen Befehlsabläufen, d.h. dem Normal-Befehlsablauf, dem Fehler-Befehlsablauf und dem Ersatz-Normal-Befehlsablauf, zugegriffen wird.

24. Verfahren nach Anspruch 23, dadurch **gekennzeichnet**, daß aufgrund der Analyse der Störung mittels Informationen zur Bewältigung der Störung ein Bereich in dem Normal-Befehlsablauf angesteuert wird, so daß die Störung wenigstens teilweise ausgeräumt bzw. ein gerichtetes Wiederanfahren der Maschine ermöglicht wird.

25. Verfahren nach Anspruch 24, dadurch **gekennzeichnet**, daß passend zu dem angesteuerten Bereich in dem Normal-Befehlsablauf die Aktoren in einen definierten Zustand versetzt werden.

26. Verfahren nach einem der Ansprüche 24 oder 25, dadurch **gekennzeichnet**, daß anstelle des Normal-Befehlsablaufs ein Ersatz-Normal-Befehlsablauf bzw, ein Bereich darin angesteuert wird.

27. Verfahren nach einem der Ansprüche 23 bis 26, dadurch **gekennzeichnet**, daß für die Befehlsabläufe und/oder das Modellierungsnetz eine Petrinetzstruktur, insbesondere für die Befehlsabläufe eine offene Petrinetzstruktur verwendet wird.

## Claims

1. A system with at least one control section for processing at least one normal instruction sequence, having:
a) at least one input section, via which instructions and/or data can be inputted;
b) at least one output section for outputting instructions and/or data;
c) a fault control section for processing a fault instruction sequence, if when processing the normal instruction sequence the fault instruction sequence is polled, the fault instruction sequence operating substantially detached from the normal instruction sequence in order to make it possible for the normal instruction sequence to begin again,
**characterised in that**
d) the system comprises at least one component with at least one actuator in order to act on the real world in order to change it or to make it coincide with a predterminable state in the normal instruction sequence, in the fault instruction sequence and/or in the alternative normal instruction sequence, wherein associated with the component is a modelling net which contains information and/or data on the current state of the component, wherein the modelling net can be constructed in particular as a Petri net, in which each overriding advantageous state of the component is associated with a position and the modelling net does not change its state if the associated component does not change its state, wherein
e) the modelling net or Petri net can only change its state if a condition matches an event and as a result of this coincidence a transition can be performed if the associated actuator changes its state.

2. A system according to Claim 1,
**characterised in that** different entry regions or addresses in a fault instruction sequence and/or different fault instruction sequences are assigned to different normal instruction sequences.

3. A system according to one of Claims 1 or 2,
**characterised in that** from the normal instruction sequence in the event of the polling of the fault instruction sequence a data set is transferred thereto, on the basis of which the fault instruction sequence performs a coordination in order to make it possible for the normal instruction sequence to start again.

4. A system according to one of Claims 1 to 3,
**characterised in that** the normal instruction sequence is stopped when the fault instruction sequence is polled or
**in that** the normal instruction sequence is stopped by the fault instruction sequence.

5. A system according to one of Claims 1 to 4,
**characterised in that** the fault-instruction sequence moves the normal instruction sequence into a predeterminable state.

6. A system according to one of Claims 1 to 5,
**characterised in that** the fault instruction sequence analyses the current instruction and/or data state in which the normal instruction sequence is located, in order to poll again the normal instruction sequence in modified form or to poll an alternative normal instruction sequence in order to transfer to the polled instruction sequence an instruction and/or data set which makes it possible for the polled instruction sequence to start.

7. A system according to one of Claims 1 to 6,
**characterised in that** the system also comprises:
- at least one sensor to obtain state parameters on the real world.

8. A system according to Claim 7,
**characterised in that** the sensors generate information or data on the real world and/or instructions which can be transferred to at least one of the different instruction sequences.

9. A system according to one of Claims 7 or 8,
**characterised in that** the system or the sensors transfers data and/or instructions to the actuators or the components with possibly several actuators, in order to act on the real world, and/or the actuators or components transfer data and/or instructions to at least one of the different instruction sequences, which contain information on the current state of the respective actuator/actuators or component(s).

10. A system according to one of the preceding Claims,
**characterised in that** at least one, preferably all, of the different instruction sequences, can have access to the modelling net(s).

11. A system according to one of Claims 1 to 10,
**characterised in that** the fault instruction sequence obtains information on the current faulty state of the system transferred from the normal instruction sequence and/or sequences associated therewith in the case of the occurrence of a malfunction.

12. A system according to Claim 11,
**characterised in that** the information on the current faulty state in particular originate from at least one of the following messages:
- messages from an operator,
- messages from an active sensor which supplies signals,
- messages from a passive sensor from which signals are requested,
- messages from an intelligent component,
- messages by a timing device.

13. A system according to one of Claims 1 to 12,
**characterised in that** a localisation of a malfunction occurs by a malfunction at a position in a normal instruction sequence or an alternative normal instruction sequence, in particular when using Petri nets, being associated with a transition.

14. A system according to one of Claims 1 to 13,
**characterised in that** a distinction is made between the malfunctions at least in accordance with the following malfunction classes:
- non-reversible malfunctions or malfunctions to be eliminated,
- conditionally reversible malfunctions or malfunctions to be eliminated,
- completely reversible malfunctions or malfunctions to be eliminated.

15. A system according to Claim 14,
**characterised in that** on the basis of the malfunction class in the fault instruction sequence, a sequence occurs which comprises at least one of the following points:
a) a position or positions in the normal instruction sequence is or are actuated into forwardly directed processing sequence of the normal instruction sequence and the real world is, as far as necessary, adapted to the conditions of this position/these positions, for example by actuators being moved into states matching the position/positions in the normal instruction sequence;
b) a position or positions in the normal instruction sequence is or are actuated into rearwardly aligned processing sequence of the normal instruction sequence and, if necessary, the real world is adapted to this position/these positions;
c) an alternative normal instruction sequence is actuated or polled, the real world being synchronised with the entry position into the alternative normal instruction sequence;
d) the normal instruction sequence is halted

16. A system according to one of Claims 1 to 15,
**characterised in that** the instruction sequences are constructed as cascaded sequences.

17. A system according to one of Claims 1 to 16,
**characterised in that** the sequence structure of at least one of the different instruction sequences is that of a Petri net.

18. A system according to Claim 17,
**characterised in that** the Petri net is a Petri net that is open on one side, a sequence according to Claim 17 taking place on the basis reaching one or more points and in particular end points in the Petri net.

19. A system according to one of Claims 1 to 18,
**characterised in that** the fault instruction sequence has access to data fields or normal nets, in particular modelling nets, in order to obtain information for overcoming the malfunction or malfunction diagnosis and/or malfunction therapy.

20. A system according to one of Claims 1 to 19,
**characterised in that** the service personnel can be involved in the elimination of malfunctions.

21. A system according to one of Claims 1 to 20,
**characterised in that** the system comprises a computer-controlled machine tool or the like.

22. A system according to one of Claims 1 to 21,
**characterised in that** via malfunctions that have occurred a protocol is performed which can be used for making a decision on how to proceed upon the occurrence of a malfunction, whereby for instance the frequency of a determined malfunction event, the sequence of determined malfunction events etc. can be used for decision making in order to react in different ways, for example to the multiple occurrence of the same malfunction.

23. A method for overcoming a malfunction, whereby:
a) a normal instruction sequence is performed, during which a discrepancy occurs between a set state and an actual state of a component with an actuator;
b) a fault instruction sequence is polled/invoked during the occurrence of the malfunction, which analyses the malfunction on the basis of data which is determined by the normal instruction sequence and/or actuators and/or sensors by the fault instruction sequence;
**characterised in that**
c) associated with the actuators are modelling nets, which according to the state of an actuator persist in a determined data state which only changes to match the change in state when the actual state of the actuator is changed, there preferably being access to each modelling net by at least one to the different instruction sequences, i.e. the normal instruction sequence, the fault instruction sequence and the alternative normal instruction sequence.

24. A method according to Claim 23,
**characterised in that** on the basis of the analysis of the malfunction by means of information for overcoming the malfunction, a region in the normal instruction sequence is actuated, so that the malfunction is at least partly eliminated or a directional restarting of the machine is made possible.

25. A method according to Claim 24,
**characterised in that** the actuators are moved into a defined state matching the actuated region in the normal instruction sequence.

26. A method according to one of Claims 24 or 25,
**characterised in that** instead of the normal instruction sequence an alternative normal instruction sequence or a region therein is actuated.

27. A method according to one of Claims 23 to 26,
**characterised in that** for the instruction sequences and/or the modelling net a Petri net structure is used, in particular an open Petri net structure for the instruction sequences.

## Revendications

1. Système comprenant au moins un segment de commande pour exécuter au moins une séquence d'instructions normale, avec :
a) au moins un segment d'entrée permettant d'entrer des instructions et/ou des données ;
b) au moins un segment de sortie pour sortir des instructions et/ou des données ;
c) un segment de commande d'erreurs pour exécuter une séquence d'instructions d'erreur lorsque la séquence d'instructions d'erreur est appelée durant l'exécution de la séquence d'instructions normale, la séquence d'instructions d'erreur fonctionnant pour l'essentiel en étant dissociée de la séquence d'instructions normale afin de pouvoir remettre en service la séquence d'instructions normale ;
caractérisé en ce que :
d) le système comporte au moins un composant avec au moins un actionneur pour agir sur le monde réel, pour le modifier ou pour le faire coïncider avec un état prédéfini dans la séquence d'instructions normale, dans la séquence d'instructions d'erreur et/ou dans la séquence d'instructions normale de remplacement, au composant étant associé un réseau de modélisation qui contient des informations et/ou des données sur l'état instantané du composant, le réseau de modélisation pouvant être configuré en particulier en réseau de Petri dans lequel une place est associée à chaque état intéressant de niveau supérieur du composant, et le réseau de modélisation ne modifiant pas son état si le composant associé ne modifie pas le sien,
e) le réseau de modélisation ou le réseau de Petri ne pouvant modifier son état que si une condition satisfait à un événement et si, du fait de cette coïncidence, une transition peut être réalisée si l'actionneur associé modifie son état.

2. Système selon la revendication 1, caractérisé en ce que différentes zones ou adresses d'accès dans une -séquence d'instructions d'erreur et/ou différentes séquences d'instructions d'erreur sont associées à différentes séquences d'instructions normales.

3. Système selon l'une des revendications 1 ou 2, caractérisé en ce que, en cas d'appel de la séquence d'instructions d'erreur, la séquence d'instructions normale transmet à celle-ci un ensemble de données sur la base desquelles la séquence d'instructions d'erreur procède à une adaptation pour pouvoir remettre en service la séquence d'instructions normale.

4. Système selon l'une des revendications 1 à 3, caractérisé en ce que la séquence d'instructions normale est arrêtée si la séquence d'instructions d'erreur est appelée ou, respectivement, en ce que la séquence d'instructions normale est arrêtée par la séquence d'instructions d'erreur.

5. Système selon l'une des revendications 1 à 4, caractérisé en ce que la séquence d'instructions d'erreur transfère la séquence d'instructions normale dans un état prédéfini.

6. Système selon l'une des revendications 1 à 5, caractérisé en ce que la séquence d'instructions d'erreur analyse l'état instantané d'instructions et/ou de données dans lequel se trouve la séquence d'instructions normale, afin de rappeler la séquence d'instructions normale sous une forme modifiée ou d'appeler une séquence d'instructions normale de remplacement afin de transmettre à la séquence d'instructions appelée un ensemble d'instructions et/ou de données qui permet de la mettre en service.

7. Système selon l'une des revendications 1 à 6, caractérisé en ce que le système comporte également :
- au moins un capteur pour recueillir des paramètres d'état sur le monde réel.

8. Système selon la revendication 7, caractérisé en ce que les capteurs génèrent des informations ou des données sur le monde réel et/ou des instructions qui peuvent être transmises à l'une des différentes séquences d'instructions.

9. Système selon l'une des revendications 7 ou 8, caractérisé en ce que le système ou, respectivement, les capteurs transmettent aux actionneurs ou, respectivement, aux composants comportant éventuellement plusieurs actionneurs des données et/ou des instructions pour agir sur le monde réel, et/ou les actionneurs ou, respectivement, les composants transmettent des données et/ou des instructions à au moins une des différentes séquences d'instructions qui contiennent des informations sur l'état instantané de l'actionneur concerné/des actionneurs ou, respectivement, du (des) composant(s).

10. Système selon une des revendications précédentes, caractérisé en ce qu'au moins une des différentes séquences d'instructions, de préférence toutes, peut accéder au(x) réseau(x) de modélisation.

11. Système selon l'une des revendications 1 à 10, caractérisé en ce que, en présence d'une défaillance, la séquence d'instructions d'erreur reçoit de la et/ou des séquences d'instructions normales qui lui sont associées des informations sur l'état instantané défaillant du système.

12. Système selon la revendication 11, caractérisé en ce que les informations sur l'état instantané défaillant proviennent en particulier d'au moins un des messages suivants :
- messages d'un opérateur,
- messages d'un capteur actif qui fournit des signaux,
- messages d'un capteur passif auquel des signaux sont demandés,
- messages d'un composant intelligent,
- messages obtenus par surveillance du temps.

13. Système selon l'une des revendications 1 à 12, caractérisé en ce qu'une défaillance est localisée en associant à une transition une défaillance correspondant à une position dans une séquence d'instructions normale ou, respectivement, dans une séquence d'instructions normale de remplacement, en particulier en cas d'emploi de réseaux de Petri.

14. Système selon l'une des revendications 1 à 13, caractérisé en ce que les défaillances peuvent être différenciées au moins en fonction des classes de défaillances suivantes :
- défaillances irréversibles ou irrémédiables,
- défaillances réversibles ou remédiables sous conditions,
- défaillances totalement réversibles ou remédiables.

15. Système selon la revendication 14, caractérisé en ce que, en fonction de la classe de défaillances dans la séquence d'instructions d'erreur, se déroule une séquence comprenant au moins un des points suivants :
a) une position ou, respectivement, des positions dans la séquence d'instructions normale est ou, respectivement, sont commandée(s) selon l'ordre d'exécution de la séquence d'instructions normale dirigé vers l'avant et, si nécessaire, le monde réel est adapté aux conditions de cette position/ces positions, par exemple en transférant des actionneurs dans des états qui conviennent à la position/aux positions dans la séquence d'instructions normale ;
b) une position ou, respectivement, des positions dans la séquence d'instructions normale est ou, respectivement, sont commandée(s) dans l'ordre d'exécution de la séquence d'instructions normale dirigé vers l'arrière et, si nécessaire, le monde réel est adapté à cette position/ces positions ;
c) une séquence d'instructions normale de remplacement est commandée ou appelée, le monde réel étant mis en accord avec la position d'accès à la séquence d'instructions normale de remplacement ;
d) la séquence d'instructions normale est arrêtée.

16. Système selon l'une des revendications 1 à 15, caractérisé en ce que les séquences d'instructions sont structurées sous la forme de séquences en cascade.

17. Système selon l'une des revendications 1 à 16, caractérisé en ce que la structure d'au moins une des différentes séquences d'instructions est celle d'un réseau de Petri.

18. Système selon la revendication 17, caractérisé en ce que le réseau de Petri est un réseau de Petri ouvert d'un côté, une séquence selon la revendication 17 se déroulant lorsqu'un ou plusieurs points, en particulier points extrêmes, du réseau de Petri sont atteints.

19. Système selon l'une des revendications 1 à 18, caractérisé en ce que la séquence d'instructions d'erreur accède à des champs de données ou à des réseaux normaux, en particulier à des réseaux de modélisation, pour obtenir des informations en vue de gérer les défaillances ou, respectivement, de les diagnostiquer et/ou d'y remédier.

20. Système selon l'une des revendications 1 à 19, caractérisé en ce que le personnel de service peut être associé à la suppression des défaillances.

21. Système selon l'une des revendications 20, caractérisé en ce que le système comporte une machine-outil ou analogue pilotée par ordinateur.

22. Système selon l'une des revendications 1 à 21, caractérisé en ce que les défaillances survenues font l'objet d'un procès-verbal qui est exploité pour décider de la conduite à tenir en présence d'une défaillance, la fréquence d'un événement défaillant déterminé, l'ordre d'événements défaillants déterminés, etc. pouvant par exemple être exploités pour prendre une décision afin de réagir différemment à de multiples apparitions d'une même défaillance.

23. Procédé de gestion d'une défaillance, dans lequel :
a) on exécute une séquence d'instructions normale durant laquelle apparaît un écart entre un état de consigne et un état effectif d'un composant avec un actionneur ;
b) lors de l'apparition de la défaillance est appelée une séquence d'instructions d'erreur qui analyse la défaillance sur la base de données recueillies par la séquence d'instructions normale et/ou par des actionneurs et/ou par des capteurs à travers la séquence d'instructions ;
caractérisé en ce que :
c) aux actionneurs sont associés des réseaux de modélisation qui, selon l'état d'un actionneur, demeurent dans un état de données déterminé qui ne se modifie en s'adaptant au changement d'état que lorsque l'état effectif de l'actionneur est modifié, au moins une des différentes séquences d'instructions, c'est-à-dire la séquence d'instructions normale, la séquence d'instructions d'erreur et la séquence d'instructions normale de remplacement, accédant de préférence à chaque réseau de modélisation.

24. Procédé selon la revendication 23, caractérisé en ce que, en fonction de l'analyse de la défaillance effectuée à l'aide d'informations de gestion de la défaillance, une zone de la séquence d'instructions normale est commandée de façon que la défaillance soit au moins partiellement éliminée ou, respectivement, qu'une remise en marche orientée de la machine soit possible.

25. Procédé selon la revendication 24, caractérisé en ce que, en fonction de la zone commandée dans la séquence d'instructions normale, les actionneurs sont transférés dans un état défini.

26. Procédé selon l'une des revendications 24 ou 25, caractérisé en ce qu'au lieu de la séquence d'instructions normale, une séquence d'instructions normale de remplacement ou, respectivement, une zone située à l'intérieur de celle-ci est commandée.

27. Procédé selon l'une des revendications 23 à 26, caractérisé en ce qu'on emploie, pour les séquences d'instructions et/ou le réseau de modélisation, une structure de réseau de Petri et, en particulier pour les séquences d'instructions, une structure de réseau de Petri ouvert.
